# EUROPÄISCHE PATENTSCHRIFT

(11) **EP 0 503 396 B1**
(45) Veröffentlichungstag und Bekanntmachung des Hinweises auf die Patenterteilung: **13.12.1995**
(21) Anmeldenummer: 92103424.5
(22) Anmeldetag: 28.02.1992
(51) Int. Cl.: A01D 78/10, A01B 73/04, A01B 63/00

(54) **Heuwerbungsmaschine**
Hay making machine
Machine de fenaison

(30) Priorität: 15.03.1991 DE 9103150 U
(43) Veröffentlichungstag der Anmeldung: 16.09.1992
(73) Patentinhaber: Maschinenfabriken Bernard Krone GmbH, D-48480 Spelle (DE)
(72) Erfinder: Krone, Bernard, W-4441 Spelle (DE); Horstmann, Josef, Dipl.-Ing., W-4530 Ibbenbüren (DE)
(74) Vertreter: Busse & Busse Patentanwälte

(56) Entgegenhaltungen:
- EP-A- 0 073 360
- EP-A- 0 289 972
- EP-A- 0 316 896
- EP-A- 0 455 022
- DE-A- 2 145 741
- DE-A- 3 208 246
- DE-U- 8 807 054
- DE-U- 8 807 161
- FR-A- 2 395 417
- GB-A- 2 022 382

## Beschreibung

Die Erfindung betrifft eine Heuwerbungsmaschine in einer Ausbildung gemäß dem Oberbegriff des Anspruchs 1.
Es sind Heuwerbungsmaschinen mit verschiedenen, die Funktionsweise beeinflussenden Radaufhängungen und Verbindungselementen zum Zugfahrzeug bekannt.
Eine bekannte Heuwerbungsmaschine (EP-A1-0316 896) wird durch Ankopplung an zwei Unterlenker eines landwirtschaftlichen Zugfahrzeugs und durch Gestaltung der Laufräder des Mittelteils als gelenkte Räder, als Anhängegerät betrieben. Die Stützräder der Kreiselrechen sind starr in Fahrtrichtung ausgerichtet. Das hat die nachteilige Folge, daß diese Stützräder bei Kurvenfahrt auch quer zur Fahrtrichtung über den Erdboden gezogen werden oder ausgehoben werden müssen.
Dieses Problem tritt in noch stärkerer Weise bei anderen bekannten, an der Ackerschiene eines Zugfahrzeugs gezogenen Heuwerbungsmaschinen auf, bei denen die Lauf- und Stützräder starr und ungelenkt befestigt sind. Bei Kurvenfahrten auf dem Feld reißen die Räder den Erdboden auf, und es kommt sogar zur Verbiegung der Radaufhängungen.
Vorteilhaft ist die Gestaltung einer Heuwerbungsmaschine mit zwei zwangsweise über Spurstangen gelenkten Laufrädern des Mittelteils und mit nachlaufenden, sich selbständig der Fahrtrichtung anpassenden Stützrädern der beiden Kreiselrechen. Diese Maschine weist eine sehr gute Manövrierfähigkeit auf, ist jedoch nur bedingt hangtauglich. Bei der Arbeit am Hang mit hangparalleler Fahrtrichtung bieten nur die zwangsweise in Fahrtrichtung gehaltenen Laufräder des Mittelteils Halt gegen das Hangabwärtsrollen oder -rutschen der Maschine. Die nachlaufenden Stützräder der Kreiselrechen können nur vertikale Kräfte zwischen Erdboden und Seitenträgern übertragen und bieten somit keinen Halt am Hang. Da der größte Teil der Gewichtskraft der Heuwerbungsmaschine auf die Kreiselrechen entfällt, haben die Laufräder des Mittelteils beim Arbeitsvorgang keine ausreichend hohe Auflagelast auf dem Erdboden, um eine sichere Fahrt am Hang zu gewährleisten.

Es ist Aufgabe der Erfindung, eine gezogene Heuwerbungsmaschine mit zwei nebeneinander sich zum Erdboden abstützenden Kreiselrechen zu schaffen, die gut manövrierfähig und insbesondere auch hangtauglich ist und mit einfachen baulichen Mitteln die Mängel und Nachteile vorab genannter Lösungen beseitigt.
Zur Lösung dieser Aufgabe zeichnet sich die Heuwerbungsmaschine der eingangs genannten Art durch die im kennzeichnenden Teil des Anspruches 1 angegebenen Merkmale aus.

Hinsichtlich wesentlicher weiterer Ausgestaltungen der Erfindung wird auf die Ansprüche 2 bis 4 verwiesen.

Bei der erfindungsgemäßen Heuwerbungsmaschine sind zwei Kreiselrechen nebeneinander an Seitenträgern eines Maschinenquerträgers befestigt. Der Maschinenquerträger ist Teil eines Mittelteils der Maschine, welches einerseits durch eine Zugdeichsel mit einem Zugfahrzeug zu verbinden ist und sich andererseits auf zwei Laufrädern zum Erdboden hin abstützt. Diese Laufräder sind vorzugsweise an einem Querträger am Ende des Mittelteils befestigt, der als Fahrgestell ausgelegt ist, wobei die Verbindung zwischen Querträger und Mittelteil vorzugsweise aus einer stehenden Schwenkachse besteht. Um diese Achse kann der Querträger mit den Laufrädern eine vom Zugfahrzeug bestimmte und über eine Spurstange übertragene Schwenkbewegung ausführen. Dadurch ist die Lenkbarkeit der Heuwerbungsmaschine gegeben, und es wird eine sehr gute Manövrierfähigkeit erreicht.
Die Kreiselrechen stützen sich einzeln auf Stützrädern zum Erdboden hin ab, wobei diese Stützräder vorzugsweise nachlaufend zu ihrer Aufhängung befestigt sind, sich also selbsttätig in Fahrtrichtung einstellen.
Die Seitenträger sind vorzugsweise so an fahrtrichtungsparallelen Schwenkachsen befestigt, daß sie mit den an ihnen befestigten Baugruppen, Kreiselrechen und Stützräder aus einer nahezu horizontalen Arbeitsstellung in eine etwa vertikale Transportstellung umschwenkbar sind. Diese Schwenkbewegung wird vorzugsweise durch die Kraft von Kolben-Zylinderanordnungen ausgeführt, die jeweils zwischen der unteren Seite der Seitenträger und dem Maschinenquerträger schwenkbar angebracht sind und über Ventile vom Zugfahrzeug aus gesteuert werden. Das Herabschwenken der Seitenträger mit den genannten Baugruppen erfolgt durch ihre Gewichtskraft nach dem Lösen vorhandener mechanischer Fallen und Ventilbetätigung.

Erfindungsgemäß wird ein Teil der Gewichtskraft der Seitenträger und an ihnen befestigten Baugruppen in Kraftspeichern aufgenommen und auf den Maschinenquerträger übertragen. Dadurch werden die Stützräder der Kreiselrechen entlastet und die Laufräder am Fahrgestell sowie die Zugdeichsel und damit das Zugfahrzeug werden in vertikaler Richtung höher belastet. Dies hat eine bedeutende Verbesserung der Hangtauglichkeit der Heuwerbungsmaschine zur Folge. Die erhöhte Radlast auf den Laufrädern, die nach einer bevorzugten Ausführungsform immer in Fahrtrichtung des Zugfahrzeugs ausgerichtet sind, verhindert das Hangabwärtsrutschen der Heuwerbungsmaschine.

Die Kraftspeicher können aus bekannten Federn, vorzugsweise Zug- oder Druckfedern, bestehen und werden in vorteilhafter Weise in den Kolben-Zylinderanordnungen zum Ausheben der Seitenträger untergebracht. Da ein Verschwenken der Seitenträger eine Längenänderung der Kolben-Zylinderanordnungen zur Folge hat, werden die Federn so in unaufwendiger Weise be- oder entlastet.
Als Kraftspeicher können auch bekannte Hydrospeicher genutzt werden. Hier wird durch die Kolben-Zylinderanordnungen die Gewichtskraft der Seitenträger und an ihnen befestigten Baugruppen in einen Druck gewandelt, welcher in dem Hydrospeicher gespeichert wird. Es ist die gleiche Wirkung wie bei Verwendung von Federn zu erreichen.
Weitere Einzelheiten und Merkmale der Erfindung sind aus nachfolgender Beschreibung ersichtlich, die durch zwei Ausführungsformen und dazugehörige Zeichnungen verdeutlicht wird.
In diesen Zeichnungen zeigen:
- Fig. 1:: eine Draufsicht auf eine erfindungsgemäße Heuwerbungsmaschine mit Zugfahrzeug in eingelenktem Zustand und mit sich in Arbeitsstellung befindlichen Kreiselrechen;
- Fig. 2:: eine Rückansicht der Heuwerbungsmaschine nach Fig. 1, wobei der rechte Kreiselrechen in Transportstellung geschwenkt wurde;
- Fig. 3:: eine der Kolben-Zylinderanordnungen mit eingebauter Druckfeder bei sich in Arbeitsstellung befindlichem Kreiselrechen in Schnittdarstellung;
- Fig. 4:: eine Schnittdarstellung gemäß Fig. 3 bei sich in Transportstellung befindlichem Kreiselrechen;
- Fig. 5:: eine der Kolben-Zylinderanordnungen mit Hydrospeicher und Steuerventilen.

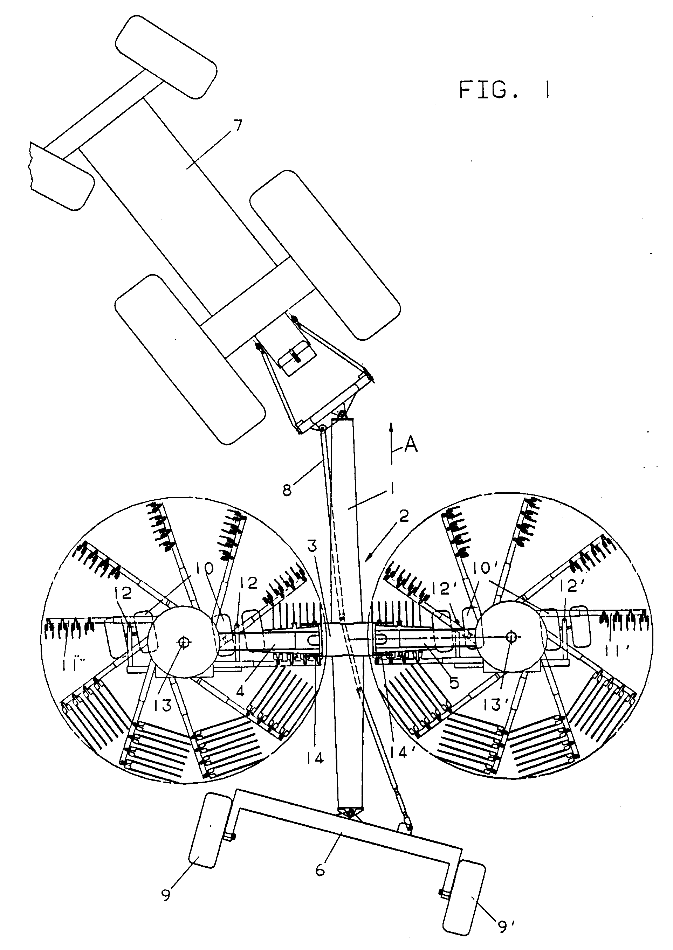

In Fig. 1 ist eine Heuwerbungsmaschine mit Merkmalen nach dem Oberbegriff des Anspruchs 1 abgebildet.
Der Maschinenrahmen besteht aus einer Zugdeichsel 1, einem Mittelteil 2, einem Maschinenquerträger 3, Seitenträgern 4, 5 sowie einem Fahrgestell 6. Die zwangsweise vom Anbaubock am Zugfahrzeug 7 über eine Spurstange 8 gelenkten Laufräder 9, 9' am Fahrgestell 6 der Heuwerbungsmaschine sind in eingelenktem Zustand dargestellt. Vorhandene Stützräder 10, 10' der Kreiselrechen 11, 11' sind nachlaufend so an stehenden Achsen 12, 12' befestigt, daß sich ihre Stellung der jeweiligen Fahrtrichtung anpaßt.
Die Kreiselrechen 11, 11' sind beiderseits des Maschinenquerträgers 3 an stehenden Wellen 13, 13' befestigt und werden vom Zugfahrzeug 7 aus über nicht in den Zeichnungen dargestellte Gelenkwellen angetrieben.

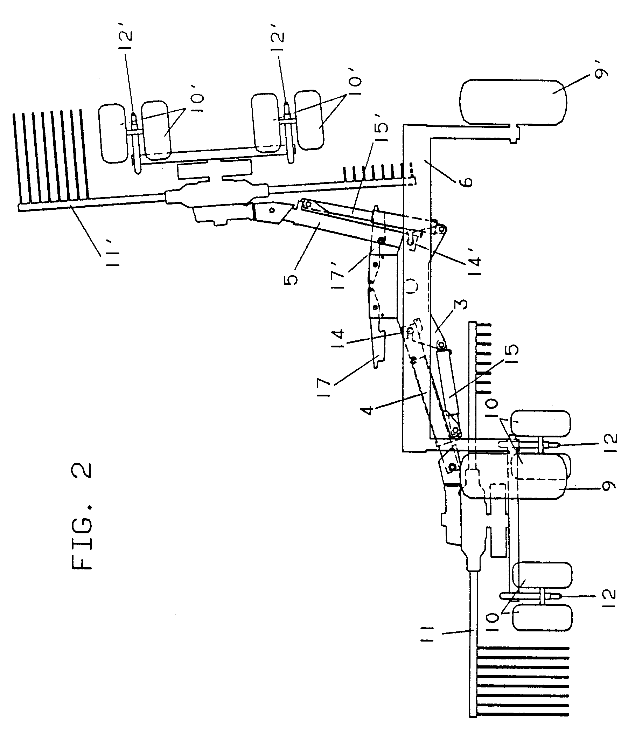

Die stehenden Wellen 13, 13' sind in Seitenträgern 4, 5 des Maschinenquerträgers 3 gelagert. Diese Seitenträger 4, 5 sind durch horizontale, fahrtrichtungsparallele Schwenkachsen 14, 14' am Maschinenquerträger 3 schwenkbar befestigt. Diese Schwenkbewegung kann, durch Anschläge begrenzt, zwischen einer etwa horizontalen Arbeitsstellung und einer nahezu vertikalen Transportstellung ausgeführt werden. Die Aufwärtsbewegung der Seitenträger 4, 5 mit den an ihnen befestigten Baugruppen, bestehend aus Kreiselrechen 11, 11', Stützrädern 10, 10' und Befestigungselementen, wird durch die in hydraulischen Kolben-Zylinderanordnungen 15, 15' gewandelte Kraft nach Zuführung von Druckmedium ermöglicht.
Diese Kolben-Zylinderanordnungen 15, 15' sind zylinderseitig unter dem Maschinenquerträger 3 und kolbenseitig unter dem jeweiligen Seitenträger 4, 5 schwenkbar befestigt und durch je ein Ventil 16 vom Zugfahrzeug 7 aus zu betätigen.
Die Abwärtsbewegung der Seitenträger 4, 5 mit allen angebauten Baugruppen erfolgt durch ihre Gewichtskraft.
Diese Schwenkbewegung hat eine Verkürzung des Längenmaßes der Kolben-Zylinderanordnungen 15, 15' zur Folge.
Sie kann nach Betätigung des Ventils 16 und nach dem Ausklinken mechanischer Fallen 17, 17' erfolgen. Dies wird aus Fig. 2 deutlich.

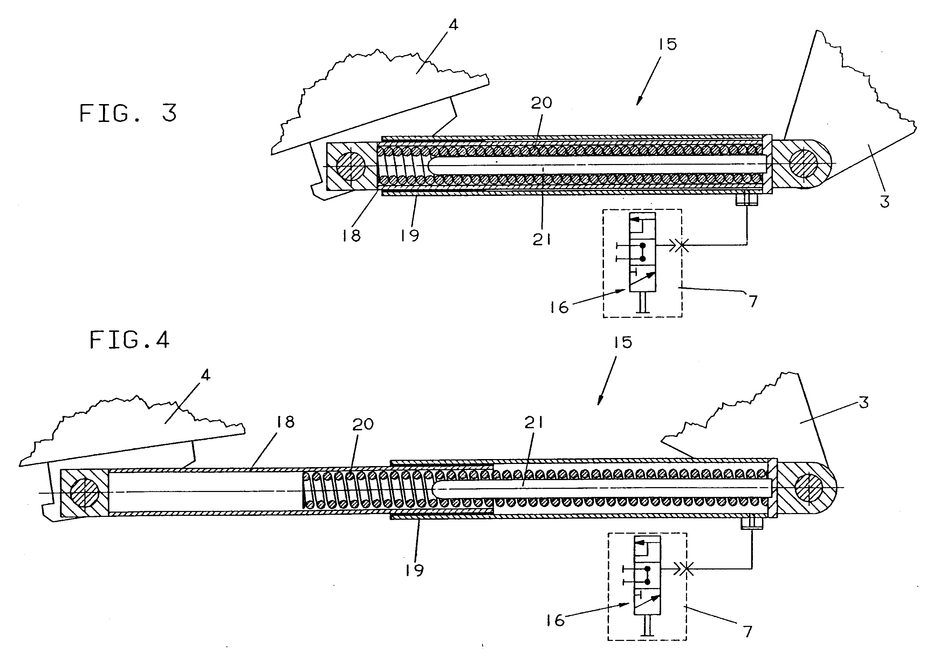

Die Kolben-Zylinderanordnungen 15, 15' kommen baugleich an beiden Maschinenseiten zur Anwendung. Eine dieser Kolben-Zylinderanordnungen 15, 15' ist in den Figuren 3 und 4 im Detail erkennbar.
Innerhalb des vom Kolben 18 und Zylinder 19 gebildeten Hohlraumes ist als Kraftspeicher eine Druckfeder 20 untergebracht, die auf einem Bolzen 21 gehalten wird, welcher an einem Ende fest mit dem Zylinder 19 verbunden ist. Die Druckfeder 20 wird bei Verkürzung des Längenmaßes der Kolben-Zylinderanordnung 15 gespannt, ist damit in Arbeitsstellung der Kreiselrechen 11, 11' gespannt und in Transportstellung entspannt. Die Kolben-Zylinderanordnung 15 wird über ein Ventil 16 vom Zugfahrzeug 7 aus angesteuert und mit Drucköl versorgt.
Durch die Druckfeder 20 wird bei sich auf dem Erdboden abstützenden Stützrädern 10, 10' ein Teil der Gewichtskraft des jeweiligen Seitenträgers 4, 5 und an ihm befestigter Baugruppen auf den Maschinenquerträgern 3 und damit auf die Laufräder 9, 9' und das Zugfahrzeug 7 übertragen.

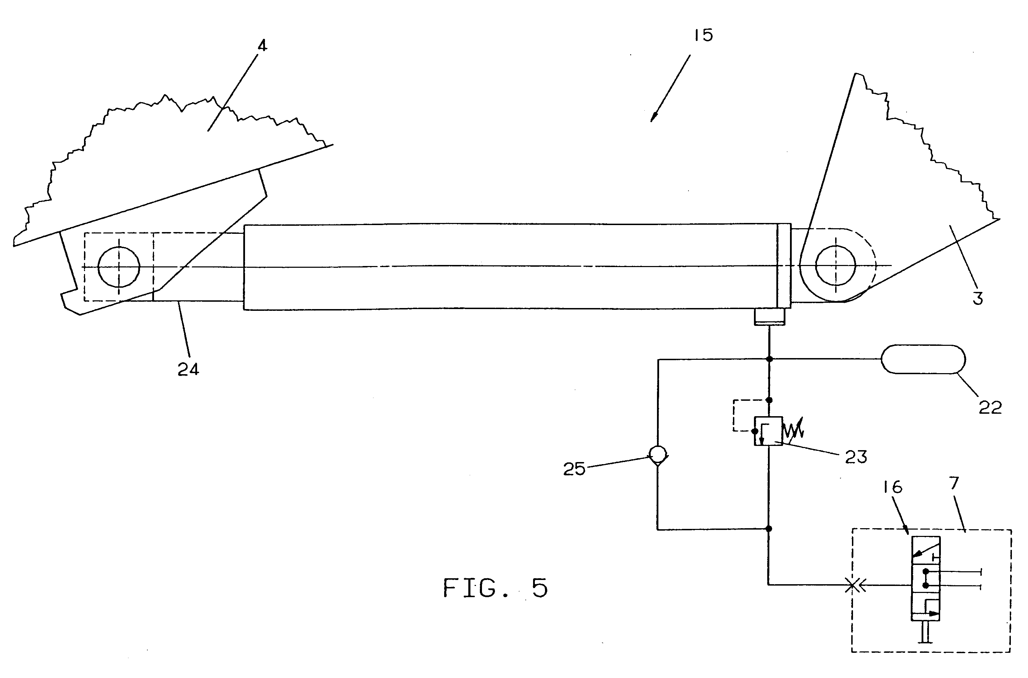

Ein weiteres Ausführungsbeispiel für die Gestaltung der Kolben-Zylinderanordnung 15 mit nahezu gleicher Wirkung ist in Fig. 5 dargestellt. Hier ist eine bekannte, einfach wirkende Kolben-Zylinderanordnung 15 mit einem Hydrospeicher 22 als Kraftspeicher durch hydraulische Steuerelemente gekoppelt. Die Gasblase in dem Hydrospeicher 22 wird beim Herabschwenken des Seitenträgers 4 und der an ihm befestigten Baugruppen komprimiert.
Durch ein einstellbares Überdruckventil 23 kann das vom Kolben 24 verdrängte Öl erst dann abfließen, wenn der gewünschte Druck in der Gasblase erreicht ist.
Zum Heben des Seitenträgers 4 wird das Drucköl über ein Rückschlagventil 25 der Kolben-Zylinderanordnung 15 zugeführt. Die Kolben-Zylinderanordnung 15' (Fig. 2) am Seitenträger 5 und zugehörige Steuerelemente sind baugleich gestaltet.

Beide Ausführungsbeispiele der Erfindung haben die vorteilhafte Folgeerscheinung, daß die Stützräder 10, 10' der Kreiselrechen 11, 11' entlastet werden und die immer der Fahrtrichtung A angepaßten Laufräder 9, 9' höher belastet werden. Dadurch ist eine sichere Fahrt auch am Hang möglich.

## Patentansprüche

1. Heuwerbungsmaschine mit zwei quer zur Fahrtrichtung (A) der Maschine nebeneinander angeordneten, sich über Stützräder (10, 10') auf dem Erdboden abstützenden Kreiselrechen (11, 11'), einen an seinen Enden mit den Kreiselrechen (11, 11') verbundenen Maschinenquerträger (3), der einen mit einer starren, an ein landwirtschaftliches Zugfahrzeug (7) anschließbare Zugdeichsel (1) verbundenen Mittelteil (2) und zwei um jeweils eine fahrtrichtungsparallele Schwenkachse (14, 14') durch die Kraft von Kolben-Zylinderanordnungen (15, 15') verschwenkbare Seitenträger (4, 5) aufweist und über zwei einachsig im Abstand hinter dem Mittelteil (2) angeordnete Laufräder (9, 9') auf dem Erdboden abgestützt ist, die an einem sich vom Mittelteil (2) rückwärts erstreckenden Fahrgestell (6) angebracht sind, dadurch gekennzeichnet, daß den Seitenträgern (4, 5), insbesondere den KolbenZylinderanordnungen (15, 15') zur Aufnahme eines Teils der Gewichtskraft der Seitenträger (4, 5) mit den an ihnen befestigten Kreiselrechen (11, 11') und Stützrädern (10, 10') Kraftspeicher zugeordnet sind.

2. Heuwerbungsmaschine nach Anspruch 1, dadurch gekennzeichnet, daß die Kraftspeicher Federn sind.

3. Heuwerbungsmaschine nach den Ansprüchen 1 und 2, dadurch gekennzeichnet, daß die Kraftspeicher Druckfedern (20) sind, die sich in den Kolben-Zylinderanordnungen (15, 15') befinden.

4. Heuwerbungsmaschine nach Anspruch 1, dadurch gekennzeichnet, daß die Kraftspeicher Hydrospeicher (22) sind, die in Verbindung mit den Kolben-Zylinderanordnungen (15, 15') stehen und über Ventile (16, 23, 25) mit Drucköl beaufschlagt werden.

## Claims

1. A haymaking machine having, disposed side-by-side and crosswise to the direction of travel (A) of the machine, two rotary rakes (11, 11') supported on the ground by jockey wheels (10, 10'), a cross-member (3) the ends of which are connected to the rotary rakes (11, 11') and which comprises a middle part (2) connected to a rigid tow bar (1) which can be connected to an agricultural tractor vehicle (7) and two lateral members (4, 5) adapted to pivot about in each case a pivot axis (14, 14') parallel with the direction of travel and propelled by the force of piston-cylinder arrangements (15, 15'), being supported on the ground by two wheels (9, 9') disposed on one axle and at a distance behind the middle part (2) and which are mounted on a chassis (6) extending rearwardly from the middle part (2), characterised in that associated with the lateral members (4, 5), particularly the piston-cylinder arrangements (15, 15'), there are force storage means intended to accommodate a part of the weight force of the lateral members (4, 5) with the rotary rakes (11, 11') and jockey wheels (10, 10') which are mounted on them.

2. A haymaking machine according to claim 1, characterised in that the force storage means are springs.

3. A haymaking machine according to claims 1 and 2, characterised in that the force storage means are thrust springs (20) which are disposed in the piston-cylinder arrangements (15, 15').

4. A haymaking machine according to claim 1, characterised in that the force storage means are hydraulic storage means (22) which are connected to the piston-cylinder arrangements (15, 15') and are subjected to pressurised fluid via valves (16, 23, 25).

## Revendications

1. Machine de fenaison comportant deux râteaux rotatifs (11, 11') s'appuyant sur le sol par des roues d'appui (10, 10'), juxtaposées transversalement à la direction de déplacement (A) de la machine, une poutre transversale (3), dont les extrémités sont reliées aux râteaux rotatifs (11, 11'), cette poutre ayant une partie médiane (2) avec un timon (1), rigide, susceptible d'être relié à un tracteur agricole (7), ainsi que deux poutres latérales (4, 5) pouvant être basculées autour d'un axe de basculement (14, 14') resspectif parallèle à la direction de déplacement, par la force de vérins (15, 15'), et s'appuyant sur le sol par deux roues de roulement (9, 9') à un axe, à une certaine distance derrière la partie médiane (2), ces roues étant montées sur un châssis (6), s'étendant vers l'arrière par rapport à la partie médiane (2), caractérisée en ce que les poutres latérales (4, 5) et notamment les vérins (15, 15') comportent des accumulateurs de force fixés aux râteaux rotatifs (11, 11') et aux roues d'appui (10, 10') pour recevoir une partie du poids des supports latéraux (4, 5).

2. Machine selon la revendication 1, caractérisée en ce que les accumulateurs de force sont des ressorts.

3. Machine selon les revendications 1 et 2, caractérisé en ce que les accumulateurs de force sont des ressorts de compression (20) logés dans les vérins (15, 15').

4. Machine selon la revendication 1, caractérisé en ce que les accumulateurs de force sont des accumulateurs hydrauliques (22) qui coopèrent avec les vérins (15, 15') et sont alimentés en liquide hydraulique par des vannes (16, 23, 25).
